# EUROPÄISCHE PATENTANMELDUNG

(11) **EP 0 831 314 A1**
(43) Veröffentlichungstag der Anmeldung: **25.03.1998**
(21) Anmeldenummer: 96810620.3
(22) Anmeldetag: 19.09.1996
(51) Int. Cl.: G01L 3/14

(54) **Vorrichtung zum Messen eines Drehmomentes**

(71) Anmelder: Lauener, Martin, 4558 Winistorf (CH)
(72) Erfinder: Lauener, Martin, 4558 Winistorf (CH)
(74) Vertreter: BOVARD AG - Patentanwälte

(57) **Zusammenfassung**

Eine Vorrichtung zum Messen eines über eine Welle (3) abgegebenen oder aufgenommenen Drehmomentes eines Gerätes (1), insbesondere einer Kraftmaschine oder einer Arbeitsmaschine, umfasst einen ersten Halteteil (9), der im wesentlichen fest mit der Unterlage verbunden ist. Dieser erste Halteteil (9) ist mit Lagermitteln (8) ausgestattet, in welchen ein zweiter Halteteil (2) um eine Schwenkachse (10) schwenkbar gelagert ist. Auf dem zweiten Halteteil (2) ist das Gerät angeordnet. Die Lagermittel (8) sind so ausgebildet, dass die Schwenkachse (10), um die der zweite Halteteil (2) bezüglich des ersten Halteteils (9) schwenkbar ist, im wesentlichen koaxial zur Achse (4) ist, um welche die Welle (3) des Gerätes (1) rotierbar ist. Zwischen dem ersten Halteteil (9) und dem zweiten Halteteil (2) ist ein Tragteil (13) eingesetzt, das mit Messmitteln (14) ausgerüstet ist und die Verschwenkung begrenzt. Mit den Messelementen (14) kann die Kraft bzw. das Drehmoment gemessen werden, die bzw. das auf den Tragteil (13) wirkt. Mit dieser Anordnung kann das Drehmoment ermittelt werden, wobei Störeinflüsse von zusätzlichen auf die Welle (3) des Gerätes (1) wirkenden Kräften ausgeschaltet sind.

## Beschreibung

Die vorliegende Erfindung bezieht sich auf eine Vorrichtung zum Messen eines über eine Welle abgegebenen oder aufgenommenen Drehmomentes gemäss dem Oberbegriff des Patentanspruchs 1.

Das über die Welle übertragbare Drehmoment ist ein direktes Mass für die übertragbaren Kräfte und bei bekannter Winkelgeschwindigkeit der Welle ist auch die übertragene Leistung bekannt. Durch Messen dieses Drehmoments und der Winkelgeschwindigkeit kann beispielsweise bei Elektro- und Getriebemotoren unabhängig vom elektrischen Wirkungsgrad, der Phasenverschiebung und der Verluste durch Reibung die abgegebene mechanische Leistung genau und kontinuierlich ermittelt werden.

Eine bekannte Möglichkeit zum Messen des Drehmomentes besteht beispielsweise darin, dass in die Welle, über welche dieses Drehmoment übertragen wird, ein Torsionsstab eingesetzt wird. Dieser Torsionsstab ist mit geeignet angebrachten Dehnmessstreifen versehen, deren Ausgangsspannungsdifferenzen in einer elektronischen Brückenschaltung ausgewertet und verstärkt ein proportionales Mass zur Verdrehung und damit zum gesuchten Drehmoment liefern. Die Dehnmessstreifen liefern nur sehr kleine Signale, die an eine Auswerteinrichtung übertragen werden müssen. Diese Übertragung erfolgt beispielsweise über Schleifringe oder über Funk, wobei die Signale bereits mittels entsprechend auf der Welle mitfahrender Elektronik verstärkt werden können. Die übertragenen Signale werden dann in einer geeigneten Einrichtung ausgewertet. Die Signalübertragung über Schleifringe oder Funk erfordern aufwendige Mittel, wobei Störungen nicht vollständig ausgeschlossen werden können.

Eine weitere bekannte Vorrichtung zum Messen eines Drehmomentes, bei welcher eine Signalübertragung von einer drehenden Welle an eine feststehende Einrichtung vermieden wird, umfasst wiederum einen Torsionsstab, auf welchen in einem gewissen Abstand voneinander zwei Zahnkränze angebracht sind. Diese beiden Zahnkränze wirken jeweils mit einem konzentrisch angeordneten Stator zusammen, der mit Sensoren ausgestattet ist, und über Induktion Impulse der sich vorbeibewegenden Zähne registrieren kann. Wenn sich nun der Torsionsstab wegen des zu übertragenden Drehmoments verdreht, erfahren die Impulse des einen Kranzes gegenüber denjenigen des anderen Kranzes eine der Verformung des Stabes proportionale Phasenverschiebung. Diese Phasenverschiebung kann als Mass für das Drehmoment ausgewertet werden. Da der Torsionsstab nicht beliebig lang sein kann und entsprechend starr ausgebildet werden muss, ist die zu messende Phasenverschiebung sehr klein. Demzufolge sind die an die Messelektronik gestellten Anforderungen sehr gross, diese muss entsprechend aufwendig ausgestaltet sein. Ein weiterer Nachteil dieser Vorrichtung besteht darin, dass das Drehmoment bei ruhender Welle nicht gemessen werden kann.

Die Aufgabe der vorliegenden Erfindung besteht nun darin, eine Vorrichtung derart auszugestalten, dass das Messen eines über eine Welle zu übertragenden Drehmomentes in einfacher Weise und mit geringem Aufwand ausgeführt werden kann, wobei die oben beschriebenen Nachteile vermieden werden können.

Erfindungsgemäss erfolgt die Lösung dieser Aufgabe durch die in der Kennzeichnung des Anspruchs 1 angegebenen Merkmale.

Mit dieser Anordnung wird nicht direkt das an der Welle wirkende Drehmoment gemessen, sondern das diesem Drehmoment entgegengesetzt wirkende und gleich grosse Reaktionsdrehmoment, das durch die entsprechenden Maschinenteile auf eine räumlich feststehende Unterlage wirkt. Die Messelemente können demzufolge ebenfalls in dieser festen Unterlage untergebracht werden, die Übertragung der Signale ist somit problemlos.

Indem der zweite Halteteil, auf welchem das Gerät mit der Welle angeordnet ist, um eine Schwenkachse schwenkbar gelagert ist, die im wesentlichen koaxial zur Achse ist, um welche die Welle rotierbar ist, haben andere äussere Kräfte, die auf die Welle wirken, wie beispielsweise Riemen-, Kettentriebkräfte oder dergleichen, keinen störenden Einfluss auf das gemessene Reaktionsdrehmoment. Demzufolge müssen in der Messeinrichtung keine weiteren Vorkehrungen getroffen werden, um den Einfluss dieser zusätzlichen Kräfte unberücksichtigt zu lassen, was den Aufbau der Messeinrichtung vereinfacht.

In vorteilhafter Weise kann durch diese Vorrichtung das über die Welle abgegebene oder aufgenommene Drehmoment auch gemessen werden, wenn die Welle still steht.

In vorteilhafter Weise sind die beiden Halteteile jeweils im wesentlichen plattenförmig ausgebildet und übereinanderliegend angeordnet. Dadurch können diese beiden Halteteile in einfacher Weise in eine entsprechende Anlage eingebaut werden, es ist auch möglich, eine bereits bestehende Anlage entsprechend nachzurüsten, da diese Vorrichtung ohne grossen Probleme zwischen Maschinenteil und beispielsweise Sockel eingesetzt werden kann.

Um die Schwenkachse bezüglich der Achse, um welche die Welle rotiert, in die koaxiale Lage bringen zu können, ist es vorteilhaft, zwischen das Gerät und den zweiten Halteteil Zwischenelemente einzusetzen, die beispielsweise zusätzlich noch in bekannter Weise in der Höhe verstellbar sind. Dadurch muss nicht für jede Anwendung eine spezielle Vorrichtung angefertigt werden, sondern die Vorrichtungen können gewisse Abstufungen in der Dimension haben.

Eine vorteilhafte Ausgestaltung der Erfindung besteht darin, dass die Lagermittel zur Lagerung des zweiten Halteteils bezüglich des ersten Halteteils jeweils in den stirnseitigen Bereichen dieser beiden Halteteile vorgesehen ist. Dadurch weist diese Vorrichtung im wesentlichen die Form einer Platte auf, die ohne weiteres zwischen Gerät und beispielsweise Fundament eingesetzt werden kann. Eine räumliche Behinderung der an die Welle des Gerätes anzukoppelnden Maschinenelemente kann somit vermieden werden. Die Lagermittel können eine Führung in Form einer Führungsbahn aufweisen, die an einem der beiden Halteteile angebracht ist, in welcher Gegenführungsteile geführt sind, die am anderen der beiden Halteteile befestigt sind. Die Führungsbahn ist hierbei in vorteilhafter Weise derart geformt, dass die Verschwenkung um eine momentane Schwenkachse erfolgt, die mindestens annähernd koaxial zur Achse ist, um welche die Welle rotierbar ist.

Anstelle einer Führungsbahn können zur Erreichung eines einfachen Aufbaus der Lagermittel diese aus jeweils zwei Stützhebeln gebildet sein, deren eines Ende am stirnseitigen Bereich des ersten Halteteils und deren anderes Ende am stirnseitigen Bereich des zweiten Halteteils angelenkt sind. Die Anlenkpunkte jedes Stützhebels liegen jeweils auf einer Geraden, die im unverschwenkten Zustand der Bauteile durch die Achse verlaufen, um welche die Welle rotierbar ist. Insbesondere bei sehr geringen Ausschwenkbewegungen des einen Bauteils bezüglich des anderen Bauteils bewegt sich die momentane Verschwenkachse bei dieser Ausgestaltung der Führung nicht übermässig von der Achse weg, um welche die Welle rotierbar ist, der störende Einfluss von anderen äusseren Kräften auf die gemessene Grösse bleibt vernachlässigbar klein.

Um ein möglichst genaues Messresultat zu erhalten und zu vermeiden, dass die Lagerung neben den radial zur Welle wirkenden Kräfte anders gerichtete weitere Kräfte aufnehmen muss, sind weitere Führungsmittel vorgesehen, die die Querkräfte aufnehmen, die im wesentlichen in Längsrichtung zur Achse wirken.

Eine weitere vorteilhafte Ausgestaltung der Erfindung besteht darin, dass der Tragteil ein elastisch verformbares Element ist, das die Form eines Biegebalkens aufweist. Dieser ist mit seinem einen Endbereich an einem der beiden Halteteile lösbar und auswechselbar befestigt, der andere Bereich ragt zwischen zwei Anschläge hinein, die am anderen der beiden Halteteile befestigt sind. Durch diese Anordnung kann jeweils ein Biegebalken eingesetzt werden, der eine Biegesteifigkeit aufweist, die auf das zu erwartende Drehmoment abgestimmt ist. Dadurch können mit der selben Vorrichtung mit unterschiedlichen Biegebalken verschieden grosse Drehmomente in optimaler Weise gemessen werden.

Der Tragteil kann auch ein Gehäuse sein, in welchem die Messelemente in Form eines Piezoquarzes untergebracht sind. Bei diesen ist bekanntlich die Verformung sehr gering, wodurch der Vorteil erreicht wird, dass die gegenseitige Verschwenkung der Bauteile ebenfalls sehr gering wird.

Selbstverständlich können auch andere Messelemente eingesetzt werden, welche eine Messung einer Kraft oder eines Drehmomentes zulassen, beispielsweise solche, die auf induktiver Messtechnik basieren.

Weitere vorteilhafte Ausgestaltungen der Erfindung ergeben sich aus den weiteren abhängigen Ansprüchen.

Ausführungsformen der erfindungsgemässen Vorrichtung werden nachfolgend anhand der beiliegenden Zeichnung beispielhaft näher erläutert.

Es zeigt
Fig. 1 in schematischer Weise den prinzipiellen Aufbau einer erfindungsgemässen Vorrichtung;
Fig. 2 eine Draufsicht auf den mit Messelementen ausgestatteten Tragteil, der die Form eines Biegebalkens aufweist;
Fig. 3 die Darstellung einer ersten Ausführungsform der Lagermittel zwischen erstem und zweitem Halteteil und der Anordnung der Messelemente, zum Teil im Schnitt;
Fig. 4 eine Schnittdarstellung einer zweiten Ausführungsform der Lagermittel zwischen erstem und zweitem Halteteil;
Fig. 5 eine Draufsicht auf die Vorrichtung gemäss Fig. 4, zum Teil geschnitten;
Fig. 6 eine Ansicht von vorn auf die Ausführungsform gemäss Fig. 4 und 5, zum Teil im Schnitt;
Fig. 7 die Darstellung einer weiteren Ausführungsform der Lagermittel zwischen erstem und zweitem Halteteil; und
Fig. 8 eine Ansicht von vorn auf die Ausführungsform gemäss Fig. 7, zum Teil im Schnitt.

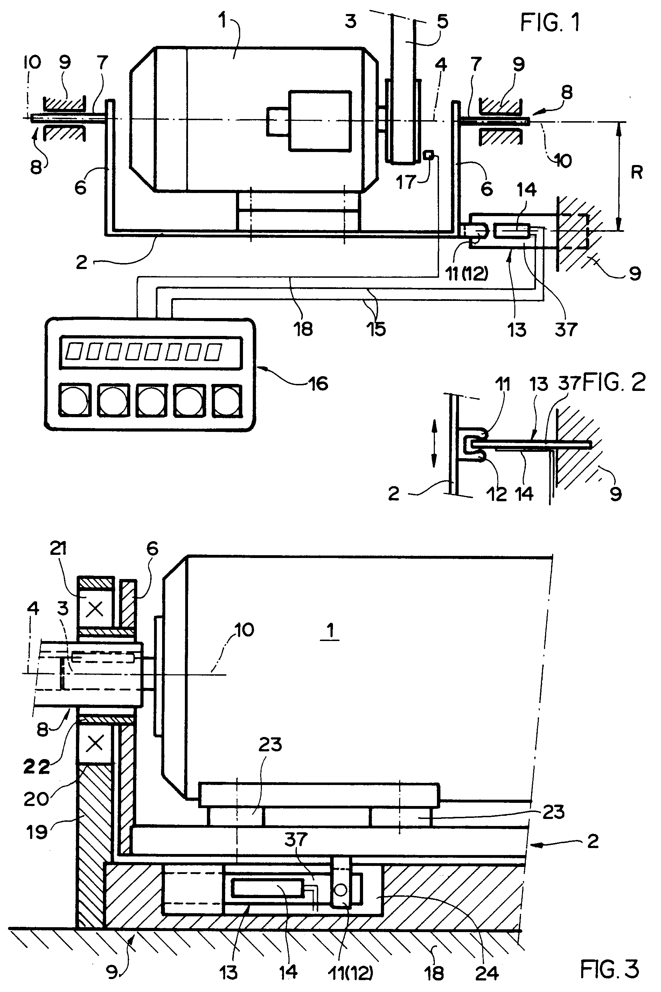

In der in Fig. 1 systematisch dargestellten ersten Ausführungsform der erfindungsgemässen Vorrichtung ist ein Gerät 1, in dieser Figur als Elektromotor dargestellt, auf einem zweiten Halteteil 2 befestigt. Das Gerät 1 weist eine Welle 3 auf, die um die Achse 4 rotierbar ist. Die Welle 3 wird angetrieben, über einen Riemen 5 kann irgendein weiteres nicht dargestelltes Aggregat betrieben werden.

Der zweite Halteteil 2, der im wesentlichen plattenförmig ausgeführt ist, ist an den stirnseitigen Enden jeweils mit einem Tragteil 6 ausgestattet. An jedem Tragteil 6 ist ein Achszapfen 7 befestigt, der in Lagermitteln 8 eines hier nur schematisch dargestellten ersten Halteteils 9 gelagert ist. Der zweite Halteteil 2 ist somit über die Schwenkzapfen 7 um eine Schwenkachse 10 schwenkbar gelagert, wobei die Schwenkachse 10 koaxial zur Achse 4 ausgerichtet ist.

Das auf der Welle 3 wirkende Drehmoment hat zur Folge, dass auf den zweiten Halteteil 2 ein Reaktionsdrehmoment ausgeübt wird, das eine dem auf die Welle 3 wirkenden Drehmoment entsprechende Grösse aufweist, aber einen entgegengesetzten Drehsinn hat. Der zweite Halteteil 2 wird am Verdrehen um die Schwenkachse 10 gehindert, wie nachfolgend noch beschrieben wird.

Die beispielsweise durch den Riemen 5 auftretenden Zugkräfte werden in den Lagermitteln 8 abgestützt, und da Achse 4 und Schwenkachse 10 koaxial sind, haben diese keine Auswirkungen auf das Reaktionsdrehmoment.

Am zweiten Halteteil 2 sind zwei Anschläge 11 und 12 befestigt, zwischen welche ein Tragteil 13 hineinragt, wie dies insbesondere auch in Fig. 2 ersichtlich ist. Dieser Tragteil ist als Biegebalken 37 ausgebildet. Dieser Biegebalken 37 ist im ersten Halteteil 9 befestigt.

Durch das Reaktionsdrehmoment, das auf den zweiten Halteteil 2 wirkt, wird über die Anschläge 11 und 12 dieser Biegebalken 37 auf Biegung beansprucht. An diesem Biegebalken 37 sind Messelemente in Form von Dehnmessstreifen 14 befestigt. Diese Dehnmessstreifen 14 sind über Verbindungsleitungen 15 mit einem Steuergerät 16 verbunden.

In bekannter Weise kann über diese Dehnmessstreifen die Verbiegung des Biegebalkens 37 ermittelt werden, was Auskunft gibt über die darauf wirkende Kraft, mit welcher dann unter Berücksichtigung des Abstandes R des Biegebalkens 37 von der Schwenkachse 10 in bekannter Weise das Drehmoment im Steuergerät 16 berechnet und angezeigt werden kann.

Über ein weiteres Messmittel in Form eines Sensors 17 kann die Winkelgeschwindigkeit der Welle 3 gemessen werden, wobei dieser Sensor 17 ebenfalls über Verbindungsleitungen 18 mit dem Steuergerät 16 verbunden ist. Dadurch lässt sich mittels des entsprechend ausgestatteten Steuergerätes 16 in bekannter Weise die Leistung ermitteln, die dann auch angezeigt werden kann.

Fig. 3 zeigt eine konstruktive Ausgestaltung eines der Lagermittel 8 gemäss dem in Fig. 1 dargestellten System. Der erste Halteteil 9 ist fest mit einer Unterlage 18 verbunden. Der erste Halteteil 9 weist einen Stützteil 19 auf, der in den Bereich der Welle 3 des Gerätes 1 hineinragt. Der Stützte 19 ist mit einem Durchlass 20 versehen, durch welchen die Welle 3 hindurchgeführt ist. In den Durchlass 20 ist ein Lager 21 eingesetzt. In diesem Lager 21 ist eine Büchse 22 drehbar gelagert, die am Träger 6 des zweiten Halteteils 2 befestigt ist.

Auf dem zweiten Halteteil 2 ist das Gerät 1 befestigt, wobei zwischen Gerät 1 und Halteteil 2 Zwischenelemente 23 eingesetzt werden können, deren Dicke in bekannter Weise variierbar sein kann, so dass das Gerät 1 so einjustiert werden kann, dass die Achse 4, um welche die Welle 3 rotierbar ist, mit der Schwenkachse 10, um welche der Tragteil 6 um die Lagermittel 8 schwenkbar ist, koaxial ist.

Im ersten Halteteil 9 ist eine Ausnehmung 24 angebracht, in welcher der Biegebalken 37 mit den darauf angeordneten Dehnmessstreifen 14 untergebracht ist. Dieser Biegebalken 37 ist am ersten Halteteil 9 befestigt, und ragt, wie bereits zu Fig. 1 und 2 beschrieben, zwischen zwei Anschläge 11 und 12 hinein, die am zweiten Halteteil 2 befestigt sind.

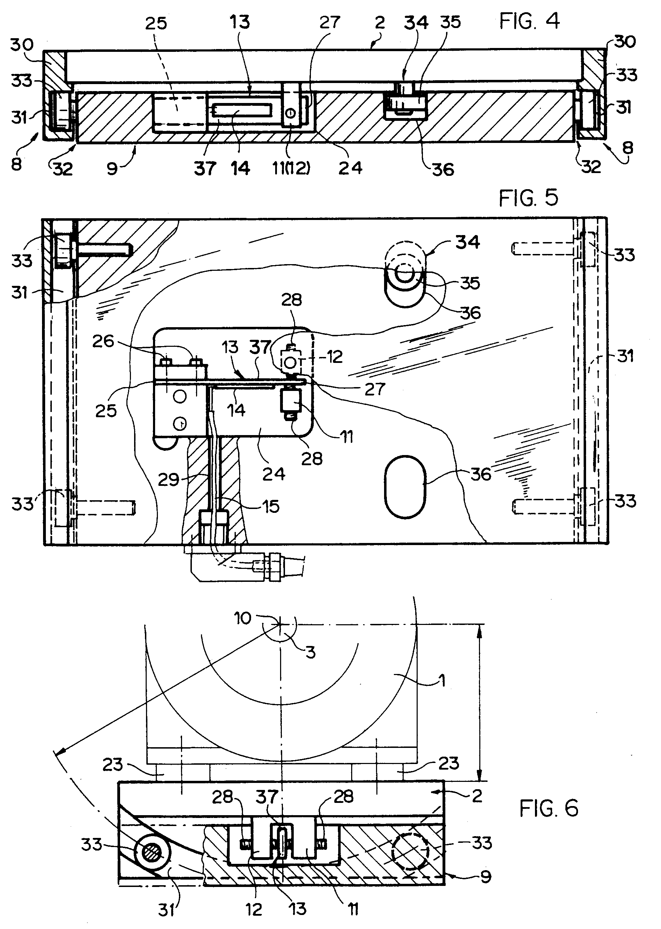

In identischer Weise sind in diesem Bereich auch die Ausführungsformen der erfindungsgemässen Vorrichtung ausgestaltet, die in den Fig. 4 bis 6 und den Fig. 7 und 8 dargestellt ist. Wiederum ist die Ausnehmung 24 im ersten Halteteil 9 angebracht. Der Biegebalken 37 ist mit einem Endbereich 25 am ersten Halteteil 9 mittels lösbarer Schrauben 26 befestigt. Der andere Endbereich 27 des Biegebalkens 37 ragt zwischen die zwei Anschläge 11 und 12 hinein, die am zweiten Halteteil 2 befestigt sind. In die beiden Anschläge 11 und 12 sind Stellschrauben 28 eingeschraubt, mittels welchen der Anschlagpunkt zum Biegebalken 37 eingestellt werden kann.

Die Verbindungsleitungen 15 können über eine Bohrung aus der Ausnehmung 24 aus dem ersten Halteteil 9 herausgeführt werden.

Die Lagermittel 8 dieser Ausführungsform setzen sich zusammen aus einem Steg 30, der stirnseitig am zweiten Halteteil 2 mittels nicht dargestellter Schrauben befestigt ist. Schlitzförmig in diesen Steg 30 ist eine Führungsbahn 31 eingearbeitet, die in den stirnseitigen Bereich 32 des ersten Halteteils 9 zu liegen kommt. In der Führungsbahn 31 sind Rollen 33 geführt, die drehbar am ersten Halteteil 9 befestigt sind.

Wie aus Fig. 6 ersichtlich ist, ist die Führungsbahn 31 als Kreisbahn ausgeführt, deren Zentrum in der Schwenkachse 10 liegt. Somit kann auch bei dieser Ausführungsform der zweite Halteteil 2 bezüglich des ersten Halteteils 9 um die Schwenkachse 10 schwenken, wobei die Messung des Drehmoments in identischer Weise erfolgt, wie vorgängig beschrieben worden ist.

Es wäre zudem auch denkbar, dass die in Fig. 6 dargestellte Form der Führungsbahn 31 nicht kreisbahnförmig ist, sondern aus zwei Geraden zusammengesetzt sind, die tangentiell verlaufen. Dies könnte bei sehr kleinen Schwenkbewegungen des zweiten Halteteils 2 bezüglich des ersten Halteteils 9 zur Anwendung kommen, da hierbei die Abweichungen von der Kreisbahn gering wären.

Durch die vorzugsweise nur sehr kleinen Schwenkbewegungen des zweiten Halteteils 2 bezüglich des ersten Halteteils 9 können die Längenmasse der Führungsbahnen 31 in Schwenkrichtung sehr klein gehalten werden, was bei der Herstellung einen geringeren Aufwand haben kann.

Damit die Rollen 33 nur radial wirkende Kräfte aufnehmen müssen, wodurch das Drehmoment mit hoher Genauigkeit ermittelt werden kann, sind zwischen dem ersten Halteteil 9 und dem zweiten Halteteil 2 weitere Führungsmittel 34 vorgesehen. Diese bestehen aus zwei im zweiten Halteteil 2 drehbar befestigten Rollen 35, die in entsprechend im ersten Halteteil 9 angebrachte Führungsbahnen 36 eingreifen. Diese Führungsbahnen 36 verlaufen im wesentlichen in Schwenkrichtung. Über diese weiteren Führungsmittel 34 können Kräfte aufgenommen werden, die im wesentlichen längs zu der Welle 3 des Gerätes 1 wirken.

Selbstverständlich können die Führungsmittel 34 in bekannter Weise auch anders ausgeführt sein, als in diesem Ausführungsbeispiel angegeben ist.

Es ist auch denkbar, bei dieser Ausführungsform auf einer Seite des zweiten Bauteils 9 zwei Rollen 33 vorzusehen, während auf der anderen Seite nur eine Rolle 33 erforderlich wäre, wenn die beschriebenen weiteren Führungsmittel 34 vorhanden sind. Man könnte auch auf die weiteren Führungsmittel 34 verzichten, wenn die Rollen 33 und die Führungsbahnen 31 so ausgestaltet wären, dass auch Schubkräfte aufgenommen werden können.

Diese zweite Ausführungsform der vorliegenden Erfindung, die in den Fig. 4 bis 6 dargestellt ist, weist gegenüber der ersten Ausführungsform den Vorteil auf, dass der Bereich der Welle 3 des Gerätes 1 vollständig frei bleibt.

Es wäre auch denkbar, auf einer Seite der Vorrichtung eine Lageranordnung vorzusehen, wie sie in den Fig. 1 bis 3 beschrieben worden ist, während auf der anderen Seite der Vorrichtung die Lageranordnung so gestaltet sein könnte, wie sie zu den Fig. 4 bis 6 dargestellt worden ist.

Wie bereits erwähnt, kann der Biegebalken 37 ausgetauscht werden, so dass Biegebalken unterschiedlicher Stärken eingesetzt werden können, abhängig von der Grösse des zu erwartenden Drehmomentes.

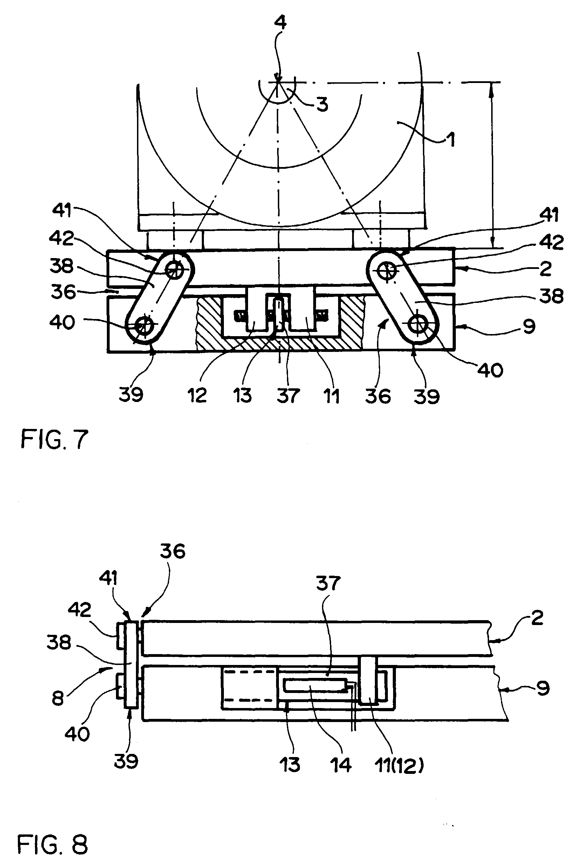

In den Fig. 7 und 8 ist ein weiteres Ausführungsbeispiel der Lagermittel 8 aufgezeigt. Die Führung 36 besteht hierbei aus zwei Stützhebeln 38. Ein Ende 39 dieser Stützhebel 38 ist hierbei mittels eines in den ersten Halteteil 9 eingesetzten Bolzens 40 an diesen angelenkt, während das andere Ende 41 mittels eines in den zweiten Halteteil 2 eingesetzten weiteren Bolzens 42 an diesen angelenkt ist. Die beiden Stützhebel 38 sind in einer mittleren, unausgeschwenkten Lage des zweiten Halteteils 2 bezüglich des ersten Halteteils 9 so ausgerichtet, dass die durch die Achsen der Bolzen 40 und 42 gebildeten Anlenkpunkte jeweils eines Stützhebels 38 auf einer Geraden liegen, die durch die Achse 4 verlaufen, um welche die Welle 3 rotierbar ist. Bei sehr geringer Verschwenkung des zweiten Bauteils 2 bezüglich des ersten Bauteils 9 sind die Abweichungen von der idealen Kreisbahn sehr klein. Dadurch bewegt sich die momentane Verschwenkachse nicht übermässig von der Achse 4 weg, um welche die Welle 3 rotierbar ist, so dass störende Einfluss von anderen äusseren Kräften auf die gemessene Grösse vernachlässigbar klein bleibt. Die Messgenauigkeit ist in den meisten Fällen genügend gross.

Diese vorgängig beschriebenen Ausführungsformen sowie davon im Rahmen der Erfindung abweichende, nicht beschriebene Ausführungsformen können in universeller Weise eingesetzt werden und ermöglichen auf einfache Art, ein wirksames Drehmoment eines darauf angeordneten Gerätes zu messen.

## Patentansprüche

1. Vorrichtung zum Messen eines über eine Welle (3) abgegebenen oder aufgenommenen Drehmomentes eines Gerätes (1), insbesondere einer Kraftmaschine oder einer Arbeitsmaschine, das über Haltemittel gegen Verdrehen gesichert an einer festen Unterlage angeordnet ist, dadurch gekennzeichnet, dass die Haltemittel aus mindestens einem ersten Halteteil (9) bestehen, der im wesentlichen fest mit der Unterlage (18) verbunden ist, und der mit Lagermitteln (8) ausgestattet ist, in welchen mindestens ein zweiter Halteteil (2) gelagert ist, auf welchem das Gerät (1) angeordnet ist, wobei die Lagermittel (8) so ausgebildet sind, dass der mindestens eine zweite Halteteil (2) bezüglich des mindestens einen ersten Halteteils (9) um eine Schwenkachse (10) schwenkbar ist, die im wesentlichen koaxial zur Achse (4) ist, um welche die Welle (3) rotierbar ist, und dass zwischen dem mindestens einen ersten Halteteil (9) und dem mindestens einen zweiten Halteteil (2) mindestens ein Tragteil (13) eingesetzt ist, welcher mit Messelementen (14) ausgerüstet ist und die Verschwenkung begrenzt.

2. Vorrichtung nach Anspruch 1, dadurch gekennzeichnet, dass der erste Halteteil (9) und der zweite Halteteil (2) jeweils im wesentlichen plattenförmig ausgebildet sind und im wesentlichen übereinanderliegend angeordnet sind, und dass der erste Halteteil (9) mit Mitteln zum Befestigen auf der Unterlage (18) und der zweite Halteteil (2) mit Mitteln zum lösbaren Verbinden mit dem Gerät (1) ausgestattet ist.

3. Vorrichtung nach Anspruch 1, dadurch gekennzeichnet, dass der erste Halteteil (9) und der zweite Halteteil (2) jeweils im wesentlichen plattenförmig ausgebildet sind und im wesentlichen übereinanderliegend angeordnet sind, und dass der erste Halteteil (9) mit Mitteln zum Befestigen auf der Unterlage (18) und der zweite Halteteil (2) als fester Bestandteil des Gerätes (1) ausgebildet ist.

4. Vorrichtung nach Anspruch 1 oder 2, dadurch gekennzeichnet, dass zwischen das Gerät (1) und den zweiten Halteteil (2), auf welchem das Gerät (1) angeordnet ist, Zwischenelemente (23) einsetzbar sind, mittels welchen die Achse (4), um welche die Welle (3) rotiert, und die Schwenkachse (10) in die koaxiale Lage einjustierbar sind.

5. Vorrichtung nach einem der Ansprüche 1 bis 4, dadurch gekennzeichnet, dass die Lagermittel (8) mindestens einen ersten Stützteil (19) umfassen, der am ersten Halteteil (9) befestigt ist, und der in den Bereich der Welle (3) hineinragt und mit einem Durchlass (20) versehen ist, durch welchen die Welle (3) hindurchgeführt ist, dass in den Durchlass (20) ein Lager (21) eingesetzt ist, in welchem ein Träger (6) um die Schwenkachse (10) schwenkbar gelagert ist, der am zweiten Halteteil (2) befestigt ist.

6. Vorrichtung nach einem der Ansprüche 1 bis 4, dadurch gekennzeichnet, dass die Lagermittel (8) mindestens eine Führung umfassen, die an einem der beiden Halteteile (9 bzw. 2) angeordnet ist und dass am andern der beiden Halteteile (2 bzw. 9) Gegenführungsteile (33) angebracht die jeweils durch die Führung geführt sind.

7. Vorrichtung nach Anspruch 6, dadurch gekennzeichnet, dass die Führung als Führungsbahn (31) jeweils schlitzförmig in einem Steg (30) angebracht ist, der im stirnseitigen Bereich am zweiten Halteteil (2) befestigt ist, derart, dass die Führungsbahn (31) in den stirnseitigen Bereich (32) des ersten Halteteils (9) zu liegen kommt, und dass die Gegenführungsteile aus Rollen (33) gebildet sind, die jeweils im stirnseitigen Bereich am ersten Halteteil (9) drehbar befestigt sind und in die zugehörige Führungsbahn (31) eingreifen.

8. Vorrichtung nach Anspruch 6, dadurch gekennzeichnet, dass die Führung aus jeweils zwei Stützhebeln (38) besteht, deren eines Ende (39) an den stirnseitigen Bereich des ersten Halteteils (9) und deren anderes Ende (41) an den stirnseitigen Bereich des zweiten Halteteils (2) angelenkt sind, und dass die Anlenkpunkte jedes Stützhebels (38) in einer unverschwenkten Lage der Halteteile (2, 9) jeweils auf einer Geraden liegen, die im wesentlichen durch die Achse (4) verlaufen, um welche die Welle (3) rotierbar ist.

9. Vorrichtung nach einem der Ansprüche 5 bis 8, dadurch gekennzeichnet, dass zur Aufnahme von Querkräften, die im wesentlichen in Längsrichtung zur Achse (4) wirken, um welche die Welle (3) rotierbar ist, zwischen dem ersten Halteteil (9) und dem zweiten Halteteil (2) weitere Führungsmittel (34) vorgesehen sind.

10. Vorrichtung nach einem der Ansprüche 1 bis 9, dadurch gekennzeichnet, dass der Tragteil (13) als elastisch verformbares Element ausgebildet ist, und dass die Messelemente (14) aus Dehnmessstreifen bestehen, die auf das elastisch verformbare Element aufgebracht sind.

11. Vorrichtung nach Anspruch 10, dadurch gekennzeichnet, dass das elastisch verformbare Element ein Siegebalken (37) ist, welcher mit seinem einen Endbereich (25) an einem der beiden Halteteile (9 bzw. 2) lösbar und auswechselbar befestigt ist, während der andere Endbereich (27) zwischen zwei Anschläge (11, 12) hineinragt, die am anderen der beiden Halteteile (2 bzw. 9) befestigt sind, die einstellbar ausgebildet sind.

12. Vorrichtung nach einem der Ansprüche 1 bis 9, dadurch gekennzeichnet, dass der Tragteil (13) ein Gehäuse umfasst, und dass die Messelemente (14) aus mindestens einem in das Gehäuse eingesetzten Piezoquarz bestehen.

13. Vorrichtung nach einem der Ansprüche 1 bis 12, dadurch gekennzeichnet, dass die am Tragteil (13) vorgesehenen Messelemente (14) über Verbindungsleitungen (15) mit einem Messgerät (16) verbunden sind, welches die von den Messelementen (14) übermittelten Messsignale in dem Drehmoment entsprechende Grössen umwandelt und anzeigt.

14. Vorrichtung nach Anspruch 13, dadurch gekennzeichnet, dass ein weiteres Messmittel (17) vorgesehen ist, mittels welchem die Winkelgeschwindigkeit der rotierbaren Welle (3) messbar ist, und dass dieses Messmittel (17) zur Übertragung der gemessenen Werte an das Steuergerät (16) mit diesem über weitere Verbindungsleitungen (18) verbunden ist.
